# EUROPEAN PATENT APPLICATION

(11) **EP 3 650 498 A1**
(43) Date of publication of application: **13.05.2020**
(21) Application number: 18827920.2
(22) Date of filing: 02.07.2018
(51) Int. Cl.: C08L 27/18, C08F 299/00, C08L 71/00

(54) **FLUORINE-CONTAINING ELASTIC COPOLYMER COMPOSITION AND CROSSLINKED RUBBER ARTICLE**

(30) Priority: 05.07.2017 JP 2017131932
(71) Applicant: AGC Inc., Chiyoda-ku Tokyo 100-8405 (JP)
(72) Inventor: HATTORI Yukiko, Tokyo 100-8405 (JP); YAMADA Takeshi, Tokyo 100-8405 (JP); KOSE Takehiro, Tokyo 100-8405 (JP)
(74) Representative: Müller-Boré & Partner Patentanwälte PartG mbB
(86) International application number: PCT/JP2018/025081
(87) International publication number: WO 2019/009250

(57) **Abstract**

To provide a fluorinated elastic copolymer composition whereby it is possible to obtain a crosslinked rubber article which is excellent in low temperature characteristics and which has sufficient hardness; and a crosslinked rubber article which is excellent in low temperature characteristics and which has sufficient hardness. The fluorinated elastic copolymer composition comprises a fluorinated elastic copolymer having units based on tetrafluoroethylene and units based on CF₂=CFOR^{f1} (wherein R^{f1} is a C₁₋₁₀ perfluoroalkyl group), and an organic silicon compound which has a perfluoropolyether chain and at least two polymerizable unsaturated bonds.

## Description

### TECHNICAL FIELD

The present invention relates to a fluorinated elastic copolymer composition and a crosslinked rubber article.

### BACKGROUND ART

A crosslinked rubber article obtained by crosslinking a fluorinated elastic copolymer is excellent in heat resistance, chemical resistance, oil resistance, weather resistance, etc., and thus has been used in applications under severe environments where a general purpose rubber cannot be used.

As a fluorinated elastic copolymer composition whereby it is possible to obtain a crosslinked rubber article which is excellent in rubber physical properties at low temperatures (hereinafter referred to also as low temperature characteristics), the following one has been proposed in Patent Document 1.
- A fluorinated elastic copolymer composition comprising a fluorinated elastic copolymer and a fluorinated ether compound having a perfluoropolyether chain and at least three polymerizable unsaturated bonds.

### PRIOR ART DOCUMENT

### PATENT DOCUMENT

Patent Document 1: WO2011/040576

### DISCLOSURE OF INVENTION

### TECHNICAL PROBLEM

With the crosslinked rubber article obtained by crosslinking the fluorinated elastic copolymer composition as disclosed in Patent Document 1, in a low-temperature elasticity recovery test (TR test) to obtain the temperature at which its specimen once frozen at a low temperature (-70 to -73°C) in a stretched state reaches a certain shrinkage by recovering the elasticity along with an increase of the temperature, the temperature at which the shrinkage reaches 10% (hereinafter referred to also as TR10) is low, and the low temperature characteristics are good.

However, the crosslinked rubber article obtained by crosslinking the fluorinated elastic copolymer composition as disclosed in Patent Document 1 is insufficient in hardness, and thus, there is a problem as a sealing material to be used at a high pressure section.

The present invention is to provide a fluorinated elastic copolymer composition whereby it is possible to obtain a crosslinked rubber article which is excellent in low temperature characteristics and which, at the same time, has sufficient hardness; and a crosslinked rubber article which is excellent in low temperature characteristics and which, at the same time, has sufficient hardness.

### SOLUTION TO PROBLEM

The present invention has the following embodiments.
<1> A fluorinated elastic copolymer composition comprising a fluorinated elastic copolymer having units based on tetrafluoroethylene and units based on a compound represented by the following formula (1), and an organic silicon compound having a perfluoropolyether chain and at least two polymerizable unsaturated bonds,

   CF₂=CFOR^{f1} (1)

   wherein R^{f1} is a C₁₋₁₀ perfluoroalkyl group.
<2> The fluorinated elastic copolymer composition according to <1>, wherein the proportion of the organic silicon compound is from 10 to 40 mass% in the total (100 mass%) of the fluorinated elastic copolymer and the organic silicon compound.
<3> The fluorinated elastic copolymer composition according to <1> or <2>, wherein the organic silicon compound is a compound having a vinyl silyl group (CH₂=CHSi) via a linking group at both terminals of a divalent perfluoropolyether chain.
<4> The fluorinated elastic copolymer composition according to any one of <1> to <3>, wherein the organic silicon compound is a compound represented by the following formula (7), 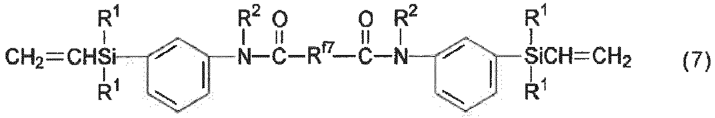 (wherein R¹ is a monovalent hydrocarbon group, R² is a hydrogen atom or a monovalent hydrocarbon group, and R^{f7} is a divalent perfluoropolyether chain.)
<5> The fluorinated elastic copolymer composition according to any one of <1> to <4>, which further contains a crosslinking agent.
<6> The fluorinated elastic copolymer composition according to <5>, which contains the crosslinking agent in an amount of from 0.3 to 10 parts by mass to 100 parts by mass of the fluorinated elastic copolymer.
<7> The fluorinated elastic copolymer composition according to <5> or <6>, wherein the crosslinking agent is an organic peroxide.
<8> The fluorinated elastic copolymer composition according to any one of <1> to <7>, which further contains a crosslinking aid.
<9> The fluorinated elastic copolymer composition according to any one of <1> to <8>, wherein the molar ratio of the units based on tetrafluoroethylene to the units based on a compound represented by the formula (1) contained in the fluorinated elastic copolymer, is from 35/65 to 90/10.
<10> The fluorinated elastic copolymer composition according to any one of <1> to <9>, wherein the fluorinated elastic copolymer further has units based on a compound represented by the following formula (2),

   CF₂=CF(OCF₂CF₂)ₙ-(OCF₂)ₘ-OR^{f2} (2)

   wherein R^{f2} is a C₁₋₄ perfluoroalkyl group, n is an integer of from 0 to 3, m is an integer of from 0 to 4, and n+m is an integer of from 1 to 7.
<11> The fluorinated elastic copolymer composition according to any one of <1> to <10>, wherein the fluorinated elastic copolymer further has units based on a fluorinated monomer having at least two polymerizable unsaturated bonds.
<12> The fluorinated elastic copolymer composition according to any one of <1> to <11>, wherein to the total of all units in the fluorinated elastic copolymer,
   the proportion of the units based on tetrafluoroethylene is from 35 to 75 mol%,
   the proportion of the units based on a compound represented by the formula (1) is from 3 to 57 mol%,
   the proportion of the units based on a compound represented by the formula (2) is from 0 to 57 mol%, and
   the proportion of the units based on a fluorinated monomer having at least two polymerizable unsaturated bonds, is from 0 to 1 mol%.
<13> The fluorinated elastic copolymer composition according to any one of <1> to <12>, wherein the fluorinated elastic copolymer further contains iodine atoms.
<14> The fluorinated elastic copolymer composition according to <13>, wherein the iodine atoms are contained in an amount of from 0.01 to 1.5 mass% in the fluorinated elastic copolymer (100 mass%).
<15> A crosslinked rubber article obtained by crosslinking the fluorinated elastic copolymer composition as defined in any one of <1> to <14>.

### ADVANTAGEOUS EFFECTS OF INVENTION

According to the fluorinated elastic copolymer composition of the present invention, it is possible to obtain a crosslinked rubber article which is excellent in low temperature characteristics and which, at the same time, has sufficient hardness. The crosslinked rubber article of the present invention is excellent in low temperature characteristics and, at the same time, has sufficient hardness.

### DESCRIPTION OF EMBODIMENTS

In this specification, the meanings of the following terms and the manner of description are as follows.

A "unit" in a copolymer means an atomic group derived from one molecule of a monomer, formed by polymerization of the monomer. A unit may be an atomic group that is directly formed by the polymerization reaction of a monomer, or an atomic group having part of said atomic group converted to another structure by treating the polymer.

An "etheric oxygen atom" is meant for an oxygen atom forming an ether bond (-O-) between carbon-carbon atoms.

A "compound represented by the formula (1)" will be referred to as "compound (1)". "Compounds represented by other formulae" will also be referred to in the same manner.

The "pressure unit (MPa)" is a "gauge pressure" unless otherwise specified.

An expression " to " showing a numerical range is meant to include the numerical values given before and after the expression as the lower limit value and the upper limit value.

### <Fluorinated elastic copolymer composition>

The fluorinated elastic copolymer composition of the present invention comprises a specific fluorinated elastic copolymer and a specific organic silicon compound. The fluorinated elastic copolymer composition of the present invention preferably further contains a crosslinking agent. The fluorinated elastic copolymer composition of the present invention preferably further contains a crosslinking aid. The fluorinated elastic copolymer composition of the present invention may contain other additives within a range not to impair the effects of the present invention, as the case requires.

### (Fluorinated elastic copolymer)

In the present invention, the fluorinated elastic copolymer has units (hereinafter referred to also as TFE units) based on tetrafluoroethylene (hereinafter referred to also as TFE) and units (hereinafter referred to also as PAVE units) based on the later-described compound (1). The fluorinated elastic copolymer of the present invention preferably has one or both of units (hereinafter referred to also as POAVE units) based on the later-described compound (2) and units (hereinafter referred to also as DVE units) based on a fluorinated monomer having at least two polymerizable unsaturated bonds. The fluorinated elastic copolymer of the present invention may further have, within a range not to impair the effects of the present invention, units based on other monomers as the case requires.

PAVE units are units based on compound (1).

CF₂=CFOR^{f1} (1)

wherein R^{f1} is a C₁₋₁₀ perfluoroalkyl group.

In R^{f1}, the perfluoroalkyl group may be linear or may be branched. The number of carbon atoms in R^{f1} is preferably from 1 to 5, more preferably from 1 to 3, from such a viewpoint that the productivity of the fluorinated elastic copolymer will be improved.

As specific examples of the compound (1), the following ones may be mentioned. Here, an expression in the parentheses following the formula is an abbreviation for the compound.

CF₂=CFOCF₃ (PMVE), CF₂=CFOCF₂CF₃ (PEVE), CF₂=CFOCF₂CF₂CF₃ (PPVE), CF₂=CFOCF₂CF₂CF₂CF₃.

As the compound (1), from such a viewpoint that the productivity of the fluorinated elastic copolymer will be improved, PMVE, PEVE or PPVE is preferred.

POAVE units are units based on compound (2). When the fluorinated elastic copolymer has POAVE units, the low temperature characteristics will be more excellent when made into a crosslinked rubber article.

CF₂=CF(OCF₂CF₂)ₙ-(OCF₂)ₘ-OR^{f2} (2)

wherein R^{f2} is a C₁₋₄ perfluoroalkyl group, n is an integer of from 0 to 3, m is an integer of from 0 to 4, and n+m is an integer of from 1 to 7.

In R^{f2}, the perfluoroalkyl group may be linear or may be branched. The number of carbon atoms in R^{f2} is preferably from 1 to 3.

When n is 0, m is preferably 3 or 4. When n is 1, m is preferably an integer from 2 to 4. When n is 2 or 3, m is preferably 0. n is preferably an integer of from 1 to 3.

When the number of carbon atoms in R^{f2}, n and m are within the ranges, low temperature characteristics when the fluorinated elastic copolymer is made into a crosslinked rubber article, will be further excellent, and also, productivity of the fluorinated elastic copolymer will be improved.

As specific examples of the compound (2), the following ones may be mentioned. Here, an expression in the parentheses following the formula is an abbreviation for the compound.

CF₂=CF-OCF₂CF₂-(OCF₂)₄-OCF₃ (C9PEVE),

CF₂=CF-OCF₂CF₂-(OCF₂)₂-OCF₃ (C7PEVE),

CF₂=CF-(OCF₂CF₂)₂-OCF₂CF₃ (EEAVE),

CF₂=CF-(OCF₂CF₂)₃-OCF₂CF₃ (EEEAVE)

CF₂=CF-OCF₂-OCF₃, CF₂=CF-OCF₂-OCF₂OCF₃

As the compound (2), C9PEVE, C7PEVE, EEAVE or EEEAVE is preferred from such a viewpoint that low temperature characteristics when the fluorinated elastic copolymer is made into a crosslinked rubber article, will be further excellent, and also, productivity of the fluorinated elastic copolymer will be improved.

These compounds can be produced by the method described in WO00/56694 by using the corresponding alcohols as raw materials.

DVE units are units based on a fluorinated monomer having at least two polymerizable unsaturated bonds. When the fluorinated elastic copolymer has DVE units, the low temperature characteristics (TR10) will be further excellent while maintaining the rubber physical properties when the fluorinated elastic copolymer is made into a crosslinked rubber article.

As the polymerizable unsaturated bond, a double bond (C=C), a triple bond (C≡C), etc. between carbon-carbon atoms may be mentioned, and a double bond is preferred. The number of polymerizable unsaturated bonds is preferably form 2 to 6, more preferably 2 or 3, particularly preferably 2.

The fluorinated monomer having at least two polymerizable unsaturated bonds is preferably a perfluoro compound.

As the fluorinated monomer having at least two polymerizable unsaturated bonds, compound (3) is preferred from such a viewpoint that when the fluorinated elastic copolymer is made into a crosslinked rubber article, the low temperature characteristics (TR10) will be further excellent while maintaining the rubber physical properties.

CF₂=CFOR^{f3}OCF=CF₂ (3)

wherein R^{f3} is a C₁₋₂₅ perfluoroalkylene group or a group having at least one etheric oxygen atom between carbon-carbon atoms in a C₂₋₂₅ perfluoroalkylene group.

In R^{f3}, the perfluoroalkylene group may be linear or may be branched. The number of carbon atoms in R^{f3} is preferably 3 or 4 from such a viewpoint that when the fluorinated elastic copolymer is made into a crosslinked rubber article, the low temperature characteristics (TR10) will be further excellent while maintaining the rubber physical properties.

As specific examples of the compound (3), the following ones may be mentioned. Here, an expression in the parentheses following the formula is an abbreviation for the compound.

CF₂=CFO(CF₂)₂OCF=CF₂,

CF₂=CFO(CF₂)₃OCF=CF₂ (C3DVE),

CF₂=CFO(CF₂)₄OCF=CF₂ (C4DVE),

CF₂=CFO(CF₂)₆OCF=CF₂, CF₂=CFO(CF₂)₈OCF=CF₂,

CF₂=CFO(CF₂)₂OCF(CF₃)CF₂OCF=CF₂,

CF₂=CFO(CF₂)₂O(CF(CF₃)CF₂O)₂CF=CF₂,

CF₂=CFOCF₂O(CF₂CF₂O)₂CF=CF₂,

CF₂=CFO(CF₂O)₃O(CF(CF₃)CF₂O)₂CF=CF₂,

CF₂=CFOCF₂CF(CF₃)O(CF₂)₂OCF(CF₃)CF₂OCF=CF₂,

CF₂=CFOCF₂CF₂O(CF₂O)₂CF₂CF₂OCF=CF₂, etc.

As the compound (3), C3DVE or C4DVE is particularly preferred from such a viewpoint that when the fluorinated elastic copolymer is made into a crosslinked rubber article, the low temperature characteristics (TR10) will be further excellent while maintaining the rubber physical properties.

Units (e) are units based on other monomers (i.e. monomers other than TFE, compound (1), compound (2) and compound (3)).

Other monomers may be a monomer having fluorine atoms and a halogen atom other than a fluorine atom (bromotrifluoroethylene, iodotrifluoroethylene, etc.), a monomer having fluorine atoms and a nitrile group (CF₂=CFO(CF₂)₅CN, perfluoro(8-cyano-5-methyl-3,6-dioxa-1-octene, etc.), etc.

The molar ratio of TFE units to PAVE units (TFE units/PAVE units) is preferably from 35/65 to 90/10, more preferably from 60/40 to 85/15, further preferably from 65/35 to 80/20.

The proportion of TFE units is preferably from 35 to 75 mol%, more preferably from 40 to 75 mol%, further preferably from 55 to 75 mol%, in all units (100 mol%) constituting the fluorinated elastic copolymer.

The proportion of PAVE units is preferably from 3 to 57 mol%, more preferably from 5 to 50 mol%, further preferably from 10 to 40 mol%, in all the units (100 mol%) constituting the fluorinated elastic copolymer.

The proportion of POAVE units is preferably from 0 to 57 mol%, more preferably from 2 to 30 mol%, further preferably from 2 to 20 mol%, in all units (100 mol%) constituting the fluorinated elastic copolymer.

The proportion of DVE units is preferably from 0 to 1 mol%, more preferably from 0.05 to 0.5 mol%, further preferably from 0.05 to 0.3 mol%, in all units (100 mol%) constituting the fluorinated elastic copolymer.

The proportion of units (e) is preferably from 0 to 5 mol%, more preferably from 0 to 3 mol%, further preferably from 0 to 2 mol%, in all units (100 mol%) constituting the fluorinated elastic copolymer.

When the proportions of TFE units, PAVE units, POAVE units, DVE units and units (e) are within the above ranges, the rubber physical properties will be good when the fluorinated elastic copolymer is made into a crosslinked rubber article.

The fluorinated elastic copolymer in the present invention preferably further contains iodine atoms, from such a viewpoint that the fluorinated elastic copolymer will be excellent in crosslinkability, and also the rubber physical properties of the crosslinked rubber article will be further excellent. It is preferred that the iodine atoms are bonded to terminals of a polymer chain of the fluorinated elastic copolymer. The terminals of a polymer chain are the concept including both terminals of the main chain and terminals of branched chains.

The method for incorporating iodine may be a method of introducing units containing iodine into the fluorinated elastic copolymer of the present invention by using a monomer containing iodine, such as iodotrifluoroethylene, for units (e), or a method of using a chain transfer agent containing iodine, such as the later-described compound (4) or (5).

The content of iodine atoms is preferably from 0.01 to 1.5 mass%, more preferably from 0.01 to 1.0 mass%, in the fluorinated elastic copolymer (100 mass%). When the content is within the above range, crosslinkability of the fluorinated elastic copolymer will be further excellent, and also the rubber physical properties of the crosslinked rubber article will be further excellent.

The storage elastic modulus G' of the fluorinated elastic copolymer is preferably from 100 to 600 kPa, more preferably from 200 to 500 kPa, further preferably from 200 to 400 kPa. The storage elastic modulus G' is an index for the average molecular weight, i.e. it being high indicates a high molecular weight, and it being low indicates a low molecular weight. When the storage elastic modulus G' is within the above range, processability of the fluorinated elastic copolymer will be excellent, and also the rubber physical properties when formed into a crosslinked rubber article will be excellent.

### (Method for producing fluorinated elastic copolymer)

The fluorinated elastic copolymer of the present invention can be produced by polymerizing monomer components comprising TFE and the compound (1) in the presence of a radical polymerization initiator. The monomer components may contain the compound (2), the compound (3) and/or other monomers as the case requires.

As the polymerization method, a radical polymerization method is preferred.

As the radical polymerization initiating source, a radical polymerization initiator, heating, irradiation of ionizing radiation, etc. may be mentioned, and from the viewpoint of excellent productivity of the fluorinated elastic copolymer, a radical polymerization initiator is preferred.

As the radical polymerization initiator, a known one may be used.

As the radical polymerization initiator to be used in the later-described emulsion polymerization, preferred is a water-soluble initiator. The water-soluble initiator may be a persulfate (ammonium persulfate, sodium persulfate, potassium persulfate, etc.), hydrogen peroxide, a water-soluble organic peroxide (disuccinic acid peroxide, diglutaric acid peroxide, tert-butyl hydroperoxide, etc.), an organic initiator (azobisisobutylamidine dihydrochloride, etc.), a redox initiator made of a combination of persulfate or hydrogen peroxide and a reducing agent such as sodium hydrogen bisulfite or sodium thiosulfate, an inorganic initiator of a system letting a small amount of iron, a ferrous salt, silver sulfate, etc. be coexistent with a redox initiator, etc.

The amount of the radical polymerization initiator is preferably from 0.0001 to 5 parts by mass, more preferably from 0.001 to 2 parts by mass, to 100 parts by mass of the monomer components.

In the case of using a radical polymerization initiator, it is preferred to polymerize the monomer components in the presence of a chain transfer agent.

The chain transfer agent may be an alcohol (methanol, ethanol, etc.), a chlorofluorohydrocarbon (1,3-dichloro-1,1,2,2,3-pentafluoropropane, 1,1-dichloro-1-fluoroethane, etc.), a hydrocarbon (pentane, hexane, cyclohexane, etc.), compound (4), compound (5), a mercaptan (tert-dodecyl mercaptan, n-octadecyl mercaptan, etc.), etc.

R^{f4}I₂ (4)

R^{f4}IBr (5)

wherein R^{f4} is a C₁₋₁₆ polyfluoroalkylene group.

In R^{f4}, the polyfluoroalkylene group may be linear or be branched. As R^{f4}, a perfluoroalkylene group is preferred.

As the chain transfer agent, the compound (4) is preferred from such a viewpoint that crosslinkability of the fluorinated elastic copolymer will be excellent, and the rubber physical properties of the cross-linked rubber article will be further excellent.

The compound (4) may be 1,4-diiodo-perfluorobutane, 1,6-diiodo-perfluorohexane, 1,8-diiodo-perfluorooctane, etc., and from the viewpoint of excellent polymerizability, 1,4 diiodo-perfluorobutane is preferred.

The amount of the chain transfer agent is suitably set based on the chain transfer constant of the chain transfer agent. In the case of using the compound (4), to 100 parts by mass of the monomer components, from 0.01 to 5 mass% is preferred, and from 0.05 to 2 mass% is more preferred.

As the polymerization method, an emulsion polymerization method, a solution polymerization method, a suspension polymerization method, a bulk polymerization method, etc. may be mentioned, and from the viewpoint of adjustment of the molecular weight and copolymer composition, and excellent productivity, an emulsion polymerization method is preferred.

In the emulsion polymerization method, monomer components are polymerized in an aqueous medium containing an emulsifier. As the aqueous medium, water, a mixture of water and a water-soluble organic solvent, etc. may be mentioned. The water-soluble organic solvent may be tert-butanol, propylene glycol, dipropylene glycol, dipropylene glycol monomethyl ether, tripropylene glycol, etc., and from such a viewpoint that the polymerization rate of monomers will not be lowered, tert-butanol or dipropylene glycol monomethyl ether is preferred.

When the aqueous medium contains a water-soluble organic solvent, dispersibility of the monomers, and dispersibility of the fluorinated elastic copolymer will be excellent, and also productivity of the fluorinated elastic copolymer will be excellent. The content of the water-soluble organic solvent is preferably from 1 to 40 parts by mass, more preferably from 3 to 30 parts by mass, to 100 parts by mass of water,.

The emulsifier may be an anionic emulsifier, a nonionic emulsifier, a cationic emulsifier, etc., and from such a viewpoint that mechanical and chemical stability of the latex will be further excellent, an anionic emulsifier is preferred.

The anionic emulsifier may be a hydrocarbon emulsifier (sodium lauryl sulfate, sodium dodecylbenzene sulfonate, etc.), a fluorinated emulsifier (ammonium perfluorooctanoate, sodium perfluorooctanoate, ammonium perfluorohexanoate, compound (6), etc.), etc.

F(CF₂)ₚO(CF(X)CF₂O)_{q}CF(Y)COOA (6)

wherein X and Y are each a fluorine atom or a C₁₋₃ linear or branched perfluoroalkyl group, A is a hydrogen atom, an alkali metal or NH₄, p is an integer of from 2 to 10, and q is an integer of from 0 to 3.

As the compound (6), the following examples may be mentioned.

C₂F₅OCF₂CF₂OCF₂COONH₄,

F(CF₂)₃O(CF(CF₃)CF₂O)₂CF(CF₃)COONH₄,

F(CF₂)₃OCF₂CF₂OCF₂COONH₄,

F(CF₂)₃O(CF₂CF₂O)₂CF₂COONH₄,

F(CF₂)₄OCF₂CF₂OCF₂COONH₄,

F(CF₂)₄O(CF₂CF₂O)₂CF₂COONH₄,

F(CF₂)₃OCF₂CF₂OCF₂COONa,

F(CF₂)₃O(CF₂CF₂O)₂CF₂COONa,

F(CF₂)₄OCF₂CF₂OCF₂COONa,

F(CF₂)₄O(CF₂CF₂O)₂CF₂COONa,

F(CF₂)OCF₂CF₂OCF₂COONH₄,

F(CF₂)₂O(CF₂CF₂O)₂CF₂COONH₄,

F(CF₂)₂OCF₂CF₂OCF₂COONa,

F(CF₂)₂O(CF₂CF₂O)₂CF₂COONa,

As the anionic emulsifier, ammonium perfluorooctanoate, C₂F₅OCF₂CF₂OCF₂COONH₄, F(CF₂)₄OCF₂CF₂OCF₂COONH₄ or F(CF₂)₃OCF₂CF₂OCF₂COONH₄ is preferred.

The amount of the emulsifier is preferably from 0.01 to 15 parts by mass, more preferably from 0.1 to 10 parts by mass, to 100 parts by mass of the aqueous medium.

By the emulsion polymerization method, a latex containing a fluorinated elastic copolymer is obtainable. The fluorinated elastic copolymer may be separated from the latex by coagulation.

As the coagulation method, a method by addition of a metal salt, addition of an inorganic acid (hydrochloric acid, etc.), mechanical shear, freeze thawing, etc. may be mentioned.

The polymerization conditions for the radical polymerization may be suitably selected depending on the monomer composition, the decomposition temperature of the radical polymerization initiator, etc.

The polymerization pressure is preferably from 0.1 to 20 MPa, more preferably from 0.3 to 10 MPa, further preferably from 0.3 to 5 MPa. The polymerization temperature is preferably from 0 to 100°C, more preferably from 10 to 90°C, further preferably from 20 to 80°C. The polymerization time is preferably from 1 to 72 hours, more preferably from 1 to 24 hours, further preferably from 1 to 12 hours.

### (Organic silicon compound)

The organic silicon compound in the present invention is an organic silicon compound having a perfluoropolyether chain and at least two polymerizable unsaturated bonds.

As the organic silicon compound, from such a viewpoint that it is readily available, and hardness is excellent when made into a crosslinked rubber article, a compound having a vinyl silyl group (CH₂=CHSi) via a linking group at both terminals of a divalent perfluoropolyether chain, is preferred, and compound (7) is particularly preferred.

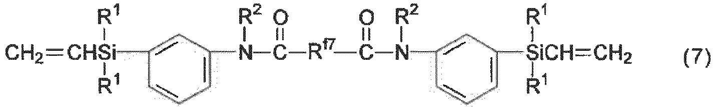

Here, R¹ is a monovalent hydrocarbon group, R² is a hydrogen atom or a monovalent hydrocarbon group, R^{f7} is a divalent perfluoropolyether chain.

As R¹, an alkyl group or an aryl group is preferred, and an alkyl group is more preferred. The number of carbon atoms in R¹ is preferably from 1 to 10, more preferably from 1 to 8.

As R², a hydrogen atom, an alkyl group or an aryl group is preferred, and a hydrogen atom or an alkyl group is more preferred. The number of carbon atoms in R² is preferably from 1 to 10, more preferably from 1 to 8.

As R^{f7}, for example, the following groups may be mentioned.

-(CF(CF₃)OCF₂)ₙ₁(CF₂OCF(CF₃))ₘ₁-,

-CF₂CF₂OCF₂(CF₂)₂CF₂OCF₂CF₂-,

-CF₂CF₂OCF₂CF(CF₃)OCF₂(CF₂)₂CF₂OCF(CF₃)CF₂OCF₂CF₂-,

-CF₂(OCF₂CF₂)ₙ₂(OCF₂)ₘ₂OCF₂-,

-CF(CF₃)(OCF(CF₃)CF₂)ₙ₃(OCF₂)ₘ₃OCF(CF₃)-,

-CF₂CF₂(OCF₂CF₂CF₂)ₙ₄OCF₂CF₂-

Here, n1 + m1 is an integer of from 2 to 200, n2 is an integer of from 5 to 50, m2 is an integer of from 1 to 10, n3 is an integer of from 5 to 50, m3 is an integer of from 1 to 10, and n4 is an integer of from 5 to 100.

As the compound (7), from such a viewpoint that it is readily available and hardness will be excellent when made into a crosslinked rubber article, compound (7-1) or compound (7-2) is preferred.

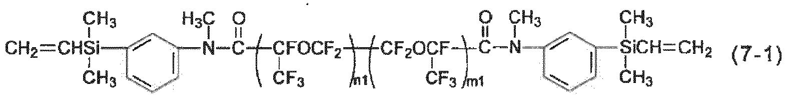

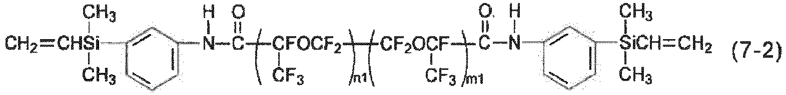

The organic silicon compound can be produced by the method described in Japanese Patent No. 3239717.

As commercially available products, SIFEL (Shin-Etsu Chemical Co., Ltd., trade name) 2610, 3590N, 3790N, 3405A/B, 3505A/B, 3705A/B, 2618, 2614, 2617, 2661, 2662, etc. may be mentioned.

The proportion of the organic silicon compound is preferably from 10 to 40 mass%, more preferably from 10 to 35 mass%, further preferably from 10 to 30 mass%, in the total (100 mass%) of the fluorinated elastic copolymer and the organic silicon compound. When the proportion is at least the lower limit value in the above range, the low temperature characteristics when made into a crosslinked rubber article will be further excellent. When the proportion is at most the upper limit value in the above range, the rubber physical properties when made into a crosslinked rubber article will be excellent.

When the fluorinated elastic copolymer composition further contains a crosslinking agent, crosslinking efficiency becomes high.

As the crosslinking agent, an organic peroxide, a polyol, an amine, triazine, etc. may be mentioned, and an organic peroxide is preferred, since the productivity, heat resistance and chemical resistance of the crosslinked rubber article will be excellent.

The organic peroxide may be a dialkyl peroxide (di-tert-butyl peroxide, tert-butyl cumyl peroxide, dicumyl peroxide, α, α-bis(tert-butylperoxy)-p-diisopropylbenzene, 2,5-dimethyl-2,5-di(tert-butylperoxy)hexane, 2,5-dimethyl-2,5-di(tert-butylperoxy)hexane-3, etc.), 1,1-di(tert-butylperoxy)-3,3,5-trimethylcyclohexane, 2,5-dimethylhexane-2,5-dihydro peroxide, benzoyl peroxide, tert-butylperoxy benzene, 1,3-bis(tert-butylperoxy isopropyl)benzene, 2,5-dimethyl-2,5-di(benzoylperoxy)hexane, tert-butylperoxy maleic acid, tert-butylperoxy isopropyl carbonate, etc. As the organic peroxide, a dialkyl peroxide is preferred.

The blend amount of the crosslinking agent is preferably from 0.3 to 10 parts by mass, more preferably from 0.3 to 5 parts by mass, further preferably from 0.5 to 3 parts by mass, to 100 parts by mass of the total of the fluorinated elastic copolymer and the organic silicon compound. When the blend amount is within the above range, the crosslinked rubber article will be excellent in balance of the strength and the elongation.

In a case where the fluorinated elastic copolymer composition further contains a crosslinking aid, crosslinking efficiency becomes higher. Further, the hardness of the crosslinked rubber article will be higher.

The crosslinking aid may be triallyl cyanurate, triallyl isocyanurate, trimethallyl isocyanurate, 1,3,5-triacryloylhexahydro-1,3,5-triazine, triallyl trimellitate, m-phenylenediamine bismaleimide, p-quinone dioxime, p,p'-dibenzoyl quinone dioxime, dipropargyl terephthalate, diallyl phthalate, N,N',N",N"'-tetraallyl terephthalamide, a vinyl group-containing siloxane oligomer (polymethyl vinyl siloxane, polymethyl phenyl vinyl siloxane, etc.), etc. Among them, triallyl cyanurate, triallyl isocyanurate or trimethallyl isocyanurate is preferred, and triallyl isocyanurate is particularly preferred.

The blend amount of the crosslinking aid is preferably from 0.1 to 10 parts by mass, more preferably from 0.5 to 5 parts by mass, to 100 parts by mass of the total of the fluorinated elastic copolymer and the organic silicon compound. When the blend amount is within the above range, the crosslinked rubber article will be excellent in balance of the strength and the elongation.

Other additives may be a metal oxide, a pigment, a filler, a reinforcing material, a processing aid, etc.

When the fluorinated elastic copolymer composition further contains a metal oxide, a crosslinking reaction will proceed promptly and reliably.

As the metal oxide, an oxide of a divalent metal such as magnesium oxide, calcium oxide, zinc oxide or lead oxide, may be mentioned. The blend amount of the metal oxide is preferably from 0.1 to 10 parts by mass, more preferably from 0.5 to 5 parts by mass, to 100 parts by mass of the total of the fluorinated elastic copolymer and the organic silicon compound. When the blend amount is within the above range, the crosslinked rubber article will be excellent in balance of the strength and the elongation.

The filler or reinforcing material may be carbon black, titanium oxide, silicon dioxide, clay, talc, polytetrafluoroethylene, polyvinylidene fluoride, polyvinyl fluoride, polychlorotrifluoroethylene, a TFE/ethylene copolymer, a TFE/propylene copolymer, a TFE/vinylidene fluoride copolymer, etc.

As the processing aid, a known one may be mentioned. As a processing aid which expresses a function as a lubricant, a fatty acid metal salt (sodium stearate, calcium stearate, etc.), a synthetic wax (polyethylene wax, etc.), a fatty acid ester (glycerol monooleate, etc.), etc. may be mentioned.

Tg of the fluorinated elastic copolymer composition is preferably at most 0°C, more preferably at most -4°C. When Tg is within the above range, the low temperature characteristics when the fluorinated elastic copolymer composition is made into a crosslinked rubber article will be further excellent.

The fluorinated elastic copolymer composition of the present invention is obtainable by kneading the fluorinated elastic copolymer, the organic silicon compound, and, as the case requires, the crosslinking agent, the crosslinking aid and/or other additives, by a kneading method using a known kneading apparatus such as a twin roll, a kneader, or a Banbury mixer.

Since the fluorinated elastic copolymer composition of the present invention as described above, comprises the fluorinated elastic copolymer and the organic silicon compound having a perfluoropolyether chain and at least two polymerizable unsaturated bonds, it is possible to obtain a crosslinked rubber article excellent in low temperature characteristics.

Further, in the fluorinated elastic copolymer composition of the present invention, since the organic silicon compound has a silicon atom, it is possible to obtain a crosslinked rubber article having sufficient hardness, as compared with the fluorinated elastic copolymer composition containing a fluorinated ether compound having no silicon atom as described in Patent Document 1.

### <Crosslinked rubber article>

The crosslinked rubber article of the present invention is one having the fluorinated elastic copolymer composition of the present invention crosslinked. The crosslinked rubber article may be a crosslinked rubber sheet, an O-ring, a sheet gasket, an oil seal, a diaphragm, a V-ring, a sealing material for a semiconductor device, a chemically resistant sealing material, a coating material, an electrical wire coating material, etc.

The tensile strength at break of the crosslinked rubber article is preferably at least 5 MPa, more preferably at least 10 MPa. The elongation at break of the crosslinked rubber article is preferably at least 100%, more preferably at least 150%. TR10 of the crosslinked rubber article is preferably at most 0°C, more preferably at most -5°C.

The type A durometer hardness of the crosslinked rubber article is preferably from 60 to 90 degrees, more preferably from 65 to 85 degrees.

The crosslinked rubber article of the present invention is obtainable by suitably molding and crosslinking the fluorinated elastic copolymer composition of the present invention by a known method.

The crosslinking method may be a method by heating, a method by irradiation of ionizing radiation, etc. The molding method may be an injection molding method, an extrusion molding method, a coextrusion molding method, a blow molding method, a compression molding method, an inflation molding method, a transfer molding method, a calendar molding method, etc.

In a case where the fluorinated elastic copolymer composition contains an organic peroxide as a crosslinking agent, crosslinking by heating is preferred.

As a specific production method for a crosslinked rubber article by crosslinking by heating, a hot press molding method may, for example, be mentioned. In the hot press molding method, using a heated mold, the fluorinated elastic copolymer composition is filled in a mold cavity having a desired shape and heated to conduct molding and crosslinking simultaneously (hot press crosslinking), whereby a crosslinked rubber article is obtainable. The heating temperature is preferably from 130 to 220°C, more preferably from 140 to 200°C, further preferably from 150 to 180°C.

In the case of using a hot press molding method, it is also preferred that the crosslinked rubber article obtained by hot press crosslinking (referred to also as primary crosslinking) is further heated in an oven using electricity, hot air, steam or the like, as a heat source, as the case requires, to let the crosslinking be progressed (referred to also as secondary crosslinking). The temperature for the secondary crosslinking is preferably from 150 to 280°C, more preferably from 180 to 260°C, further preferably from 200 to 250°C. The secondary crosslinking time is preferably from 1 to 48 hours, more preferably from 4 to 24 hours. By sufficiently conducting the secondary crosslinking, the rubber physical properties of the crosslinked rubber article will be improved. Further, a residue of the peroxide contained in the crosslinked rubber article will be decomposed and volatilized, and thus will be reduced. The hot press molding method is preferably applied to the molding of a sealing material or the like.

As the ionizing radiation in the method by irradiation of ionizing radiation, electron beams, gamma rays, etc. may be mentioned. In the case of crosslinking by irradiation of ionizing radiation, a method is preferred wherein, in advance, the fluorinated elastic copolymer composition is molded into a desired shape, and then, ionizing radiation is irradiated for crosslinking. The molding method may be a method of applying a suspension solution having the fluorinated elastic copolymer composition dispersed in a suitable solvent, followed by drying to form a coating film, or a method of extrusion molding the fluorinated elastic copolymer composition into a shape of a hose or electric wire. The irradiation dose of ionizing radiation may be suitably set and is preferably from 1 to 300 kGy, more preferably from 10 to 200 kGy.

The crosslinked rubber article of the present invention as described above, is excellent in low temperature characteristics and has sufficient hardness, since it is one prepared by crosslinking the fluorinated elastic copolymer composition of the present invention.

### EXAMPLES

In the following, the present invention will be described in more detail with reference to Examples, but the present invention is not limited to these Examples. Here, Ex. 2 to 11 are Examples of the present invention, and Ex. 1 is a Comparative Example.

### <Measurements, evaluations>

### (Proportions of the respective units in fluorinated elastic copolymer)

Obtained from the ¹⁹F-NMR analysis, the fluorine content analysis and the infrared absorption spectrum analysis.

### (Content of iodine atoms in fluorinated elastic copolymer)

Quantified by an apparatus having an automatic sample combustion device (pretreatment apparatus for ion chromatography) (manufactured by Dia Instruments Co., Ltd., AQF-100) and an ion chromatograph combined.

### (Tg of fluorinated elastic copolymer composition)

Using a differential scanning calorimeter (manufactured by Seiko Instruments Inc. DSC7020 Model), 10 ± 0.1 mg of a fluorinated elastic copolymer composition was heated from -70°C to 50°C at a rate of 10°C/min. and then cooled to -70°C at a rate of 10°C/min., whereby the center temperature in the endothermic peak change at the time of cooling to -70°C at 10°C/min. was adopted as the glass transition temperature Tg. Tg becomes an index for the low temperature characteristics of the crosslinked rubber article.

### (5% mass reduction temperature of fluorinated elastic copolymer composition)

Using a differential thermogravimetric simultaneous measurement apparatus (manufactured by Seiko Instruments Inc., TG/DTA7200 Model), in a nitrogen atmosphere, a fluorinated elastic copolymer composition (10 mg) was heated at a temperature raising rate of 10°C/min., whereby the temperature at the time when the mass reduction rate of the fluorinated elastic copolymer composition became 5 mass% was obtained. This 5% mass reduction temperature becomes an index for the heat resistance of the crosslinked rubber article.

### (MH-ML of fluorinated elastic copolymer composition)

Using a crosslinking property measuring instrument (manufactured by Alpha Technologies Inc., RPA), the crosslinking properties were measured at 177°C for 12 minutes under a condition of an amplitude of 3 degrees. In the crosslinking properties, MH represents the maximum value of the torque, ML represents the minimum value of the torque, and MH-ML represents the degree of crosslinking. The crosslinking properties are an index for the crosslinking reaction of the fluorinated copolymer, i.e. the larger the value of MH-ML, the better the crosslinking.

### (Specific gravity of crosslinked rubber article)

Using a hydrometer (manufactured by Shinko Denshi), the specific gravity was measured in accordance with JIS K6220-1.

### (Tensile strength at break of crosslinked rubber article)

Using a tester (manufactured by Ueshima Seisakusho Co., Ltd., Quick Leader), the tensile strength at break was measured in accordance with JIS K 6251: 2010 (corresponding to International Standard ISO 37: 2005).

### (Elongation at break of crosslinked rubber article)

Using a tester (manufactured by Ueshima Seisakusho Co., Ltd., Quick Leader), the elongation at break was measured in accordance with JIS K 6251: 2010 (corresponding to International Standard ISO 37: 2005).

### (Tensile stress of crosslinked rubber article)

Using a tester (manufactured by Ueshima Seisakusho Co., Ltd., Quick Leader), the tensile stress at 100% elongation was measured in accordance with JIS K 6251: 2010 (corresponding to International Standard ISO 37:2005).

### (Hardness of crosslinked rubber article)

Using an automatic hardness meter for rubber (manufactured by H Barleys Co., Digitest), Type A Durometer Hardness was measured in accordance with JIS K6253-1: 2012 (corresponding to International Standard ISO 18517: 2005).

### (TR10 of crosslinked rubber article)

Using a TR tester (manufactured by Yasuda Seiki Seisakusho, Ltd., No.145-L), in accordance with the low temperature elastic recovery test (TR test) as described in JIS K6261: 2006 (corresponding to International Standard ISO 2921: 1982), the temperature TR10 at which a test specimen frozen at a low temperature (-70 to -73°C) in a stretched state, recovers the elasticity along with an increase of the temperature so that the shrinkage reaches 10%, was obtained.

### <Production of fluorinated elastic copolymer>

### (Production Example 1)

After degassing a stainless steel pressure reactor having an internal volume of 2,100 mL provided with an anchor blade, 804 g of ultrapure water, 80.1 g of a 30 mass% solution of C₂F₅OCF₂CF₂OCF₂COONH₄, 1.8 g of a 5 mass% aqueous solution of disodium hydrogen phosphate 12 hydrate, and 0.87 g of 1,4-diiodo-perfluorobutane were charged, and the vapor phase was replaced with nitrogen. While stirring at a speed of 600 rpm by using the anchor blade, after the internal temperature became 80°C, 13 g of TFE and 65 g of PMVE were injected into the container. The internal pressure of the reactor was 0.90 MPa. 20 mL of a 1 mass% aqueous solution of ammonium persulfate was added to initiate the polymerization. When the addition ratio of monomers injected before initiation of the polymerization (hereinafter referred to as initial monomers) was represented by a molar ratio, TFE:PMVE = 25:75.

Along with the progress of the polymerization, at the time when the internal pressure of the reactor decreased to 0.89 MPa, TFE was injected to increase the internal pressure of the reactor to 0.90 MPa. This operation was repeated, and every time when 8 g of TFE was injected, 7 g of PMVE was also injected.

When the total addition mass of TFE became 80 g, addition of the monomers injected after initiation of the polymerization (hereinafter referred to as "post-addition monomers") was terminated, and the internal temperature of the reactor was cooled to 10°C to terminate the polymerization reaction and to obtain a latex containing a fluorinated elastic copolymer. The polymerization time was 180 minutes. Further, the total added masses of the post-addition monomers were such that TFE was 80 g and PMVE was 63 g, and when they were converted to a molar ratio, TFE:PMVE = 65:35.

The latex was added to a 5 mass% aqueous solution of aluminum potassium sulfate, to coagulate and separate the fluorinated elastic copolymer. The fluorinated elastic copolymer was filtered, washed with ultrapure water and vacuum-dried at 50°C, to obtain a white fluorinated elastic copolymer 1. The proportions of the respective monomers were TFE:PMVE = 66:34, and the content of iodine atoms was 0.34 mass%.

### (Production Example 2)

After degassing a stainless steel pressure reactor having an internal volume of 2,100 mL provided with an anchor blade, 900 g of ultrapure water, 80.1 g of a 30 mass% solution of C₂F₅OCF₂CF₂OCF₂COONH₄, 54 g of C7PEVE, 1.32 g of C3DVE, 1.8 g of a 5 mass% aqueous solution of disodium hydrogen phosphate 12 hydrate, and 0.6 g of 1,4-diiodo-perfluorobutane were charged, and the vapor phase was replaced with nitrogen. While stirring at a speed of 600 rpm by using the anchor blade, after the internal temperature became 80°C, 25 g of TFE and 45 g of PMVE were injected into the container. The internal pressure of the reactor was 0.90 MPa. 20 mL of a 2.5 mass% aqueous solution of ammonium persulfate was added to initiate the polymerization. When the addition ratio of the initial monomers was represented by a molar ratio, TFE:PMVE:C7PEVE:C3DVE = 38.90:40.86:2:0.24.

Along with the progress of the polymerization, at the time when the internal pressure of the reactor decreased to 0.89 MPa, the internal pressure of the reactor was increased to 0.90 MPa. This operation was repeated, and every time when 7.2 g of TFE was injected, 4.1 g of PMVE was also injected.

At the time when the total addition mass of TFE became 71 g, addition of post-addition monomers was terminated, and the internal temperature of the reactor was cooled to 10°C, to terminate the polymerization reaction and to obtain a latex containing a fluorinated elastic copolymer. The polymerization time was 150 minutes. Further, the total added masses of the post-addition monomers were such that TFE was 71 g and PMVE was 37 g, and when they were converted to a molar ratio, TFE:PMVE = 76:24.

The latex was added to a 5 mass% aqueous solution of aluminum potassium sulfate, to coagulate and separate the fluorinated elastic copolymer. The fluorinated elastic copolymer was filtered, washed with ultrapure water and vacuum-dried at 50°C, to obtain a white fluorinated elastic copolymer 2. The proportions of the respective monomers were TFE:PMVE:C7PEVE:C3DVE = 71.16:19.9:8.8:0.14, and the content of iodine atoms was 0.2 mass%.

### <Production of fluorinated elastic copolymer compositions>

### (Ex. 1 to 11)

In the blend formulation as shown in Table 1, kneading was conducted by a twin roll, to obtain fluorinated elastic copolymer compositions in Ex. 1 to 11. The results with respect to the fluorinated elastic copolymer compositions are shown in Table 1.

### <Production of crosslinked rubber articles>

With respect to the fluorinated elastic copolymer compositions in Ex. 1 to 11, after conducting hot pressing (primary crosslinking) at 150°C for 20 minutes, secondary crosslinking for 4 hours was conducted in an oven at 200°C to obtain crosslinked rubber sheets with a thickness of 2 mm. The crosslinked rubber sheets were punched out by a No. 3 dumbbell, to obtain test specimens in Ex. 1 to 11. The results with respect to the test specimens are shown in Table 1.

**[Table 1]**

| | | | Ex. 1 | Ex. 2 | Ex. 3 | Ex.4 | Ex. 5 | Ex. 6 | Ex. 7 | Ex. 8 | Ex. 9 | Ex. 10 | Ex. 11 |
|---|---|---|---|---|---|---|---|---|---|---|---|---|---|
| Blend formulation (parts by mass) | Fluorinated elastic copolymer 1 (G'480 kPa) | | 100 | 90 | 80 | 95 | 90 | 80 | 70 | 60 | 50 | - | - |
| | Fluorinated elastic copolymer 2 (G'328 kPa) | | - | - | - | - | - | - | - | - | - | 90 | 80 |
| | SlFEL® 2610 | | - | 10 | 20 | 5 | - | - | - | - | - | - | - |
| | SIFEL® 3590N | | - | - | - | - | 10 | 20 | 30 | 40 | 50 | 10 | 20 |
| | Perhexa® 25B | | 1 | 1 | 1 | 1 | 1 | 1 | 1 | 1 | 1 | 1 | 1 |
| | Carbon black | | 10 | 10 | 10 | 10 | 10 | 10 | 10 | 10 | 10 | 15 | 15 |
| | Triallyl isocyanate (60%) | | 5 | 5 | 5 | 5 | 5 | 5 | 5 | 5 | 5 | 3 | 3 |
| | Calcium stearate | | 1 | 1 | 1 | 1 | 1 | 1 | 1 | 1 | 1 | 1 | 1 |
| Rubber physical properties | Specific gravity | g/cm³ | 1.99 | 1.963 | 1.939 | 1.979 | 1.977 | 1.962 | 1.928 | 1.910 | 1.899 | 1.960 | 1.950 |
| | MH-ML | - | 135 | 67.22 | 23.62 | 77.4 | 80.7 | 55.1 | 30.9 | 20.1 | 5.6 | 57.2 | 41.4 |
| | Tensile strength at break | MPa | 24.5 | 19 | 10 | 22.5 | 22.5 | 20.1 | 14.4 | 10.2 | 4 | 10.8 | 9.1 |
| | Elongation at break | % | 200 | 196 | 214 | 189 | 209 | 237 | 272 | 220 | 130 | 149 | 145 |
| | Tensile stress | MPa | 7.5 | 6 | 4 | 6.5 | 7 | 5.5 | 4.1 | 3.1 | 2 | 8.0 | 7.0 |
| | Hardness | shore A | 74 | 73 | 74 | 73 | 76 | 78 | 77 | 77 | 79 | 75 | 77 |
| Low temperature characteristics | Tg | °C | -2.3 | -6.0 | -7.8 | -3.5 | -4.5 | -7.3 | - | - | - | - | - |
| | TR10 | °C | -1.9 | -7.7 | -9.6 | -4.2 | -8.5 | -12.2 | -12.9 | -14.1 | -15.8 | -23.4 | -26.4 |
| Heat resistance | 5% mass decrease temperature | °C | 443.7 | 438.8 | 430.4 | 446.8 | 447.2 | 444.2 | - | - | - | - | - |

Product names in the Table are as follows.

Perhexa 25B: trade name of NOF Corporation., 2,5-dimethyl-2,5-di(tert-butylperoxy)hexane.

SIFEL2610: trade name of Shin-Etsu Chemical Co., Ltd., an organic silicon compound having a perfluoropolyether chain and at least two polymerizable unsaturated bonds.

SIFEL3590N: trade name of Shin-Etsu Chemical Co., Ltd., an organic silicon compound having a perfluoropolyether chain and at least two polymerizable unsaturated bonds.

The fluorinated elastic copolymer composition in Ex. 1 not containing a compound having a perfluoropolyether chain and polymerizable unsaturated bonds, was insufficient in low temperature characteristics when made into a crosslinked rubber article.

Ex. 2 to 11 are Examples containing an organic silicon compound having a perfluoropolyether chain and at least two polymerizable unsaturated bonds. It was possible to obtain crosslinked rubber articles which were excellent in low temperature characteristics and had sufficient hardness.

### INDUSTRIAL APPLICABILITY

The fluorinated elastic copolymer composition of the present invention can be used for ordinary rubber products, and since it is excellent in low temperature characteristics, it can be suitably used in particular for an O-ring, a sheet gasket, an oil seal, a diaphragm, a V-ring, etc. to be used in a low temperature environment. Further, it can be suitably used also for a sealing material for a semiconductor device, a chemically resistant sealing material, a coating material, an electric wire coating material, etc. Further, it can be applied also to a rubber coating material such as a corrosion-resistant rubber coating material or an anti-urea grease sealing material, an adhesive rubber, a hose, a tube, a calendar sheet (roll), a sponge, a rubber roll, an oil drilling member, a heat dissipation sheet, a solution crosslinked product, a rubber sponge, a bearing seal (an anti-urea grease, etc.), a lining (chemically resistant), an automotive insulation sheet, an insulating sheet for an electronic apparatus, a rubber band for a watch, an endoscopic packing (amine resistant), a bellows hose (processed from a calendar sheet), a water heater packing/valve, a fender (marine civil engineering, ships), fibers, nonwoven fabrics (protective clothing, etc.), a base sealant, rubber gloves, a stator for a uniaxial eccentric screw pump, parts for a urea SCR system, an anti-vibration agent, a damping agent, a sealing agent, an additive to other materials, and applications to toys.

The entire disclosure of Japanese Patent Application No. 2017-131932 filed on July 5, 2017 including specification, claims and summary is incorporated herein by reference in its entirety.

## Claims

1. A fluorinated elastic copolymer composition comprising a fluorinated elastic copolymer having units based on tetrafluoroethylene and units based on a compound represented by the following formula (1), and an organic silicon compound having a perfluoropolyether chain and at least two polymerizable unsaturated bonds,
CF₂=CFOR^{f1} (1)
wherein R^{f1} is a C₁₋₁₀ perfluoroalkyl group.

2. The fluorinated elastic copolymer composition according to Claim 1, wherein the proportion of the organic silicon compound is from 10 to 40 mass% in the total (100 mass%) of the fluorinated elastic copolymer and the organic silicon compound.

3. The fluorinated elastic copolymer composition according to Claim 1 or 2, wherein the organic silicon compound is a compound having a vinyl silyl group (CH₂=CHSi) via a linking group at both terminals of a divalent perfluoropolyether chain.

4. The fluorinated elastic copolymer composition according to any one of Claims 1 to 3, wherein the organic silicon compound is a compound represented by the following formula (7), 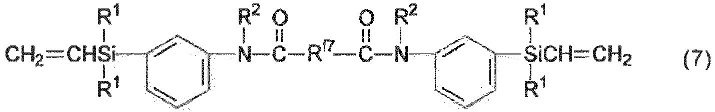 (wherein R¹ is a monovalent hydrocarbon group, R² is a hydrogen atom or a monovalent hydrocarbon group, and R^{f7} is a divalent perfluoropolyether chain.)

5. The fluorinated elastic copolymer composition according to any one of Claims 1 to 4, which further contains a crosslinking agent.

6. The fluorinated elastic copolymer composition according to Claim 5, which contains the crosslinking agent in an amount of from 0.3 to 10 parts by mass to 100 parts by mass of the fluorinated elastic copolymer.

7. The fluorinated elastic copolymer composition according to Claim 5 or 6, wherein the crosslinking agent is an organic peroxide.

8. The fluorinated elastic copolymer composition according to any one of Claims 1 to 7, which further contains a crosslinking aid.

9. The fluorinated elastic copolymer composition according to any one of Claims 1 to 8, wherein the molar ratio of the units based on tetrafluoroethylene to the units based on a compound represented by the formula (1) contained in the fluorinated elastic copolymer, is from 35/65 to 90/10.

10. The fluorinated elastic copolymer composition according to any one of Claims 1 to 9, wherein the fluorinated elastic copolymer further has units based on a compound represented by the following formula (2),
CF₂=CF(OCF₂CF₂)ₙ-(OCF₂)ₘ-OR^{f2} (2)
wherein R^{f2} is a C₁₋₄ perfluoroalkyl group, n is an integer of from 0 to 3, m is an integer of from 0 to 4, and n+m is an integer of from 1 to 7.

11. The fluorinated elastic copolymer composition according to any one of Claims 1 to 10, wherein the fluorinated elastic copolymer further has units based on a fluorinated monomer having at least two polymerizable unsaturated bonds.

12. The fluorinated elastic copolymer composition according to any one of Claims 1 to 11, wherein to the total of all units in the fluorinated elastic copolymer,
the proportion of the units based on tetrafluoroethylene is from 35 to 75 mol%, the proportion of the units based on a compound represented by the formula (1) is from 3 to 57 mol%,
the proportion of the units based on a compound represented by the formula (2) is from 0 to 57 mol%, and
the proportion of the units based on a fluorinated monomer having at least two polymerizable unsaturated bonds, is from 0 to 1 mol%.

13. The fluorinated elastic copolymer composition according to any one of Claims 1 to 12, wherein the fluorinated elastic copolymer further contains iodine atoms.

14. The fluorinated elastic copolymer composition according to Claim 13, wherein the iodine atoms are contained in an amount of from 0.01 to 1.5 mass% in the fluorinated elastic copolymer (100 mass%).

15. A crosslinked rubber article obtained by crosslinking the fluorinated elastic copolymer composition as defined in any one of Claims 1 to 14.
